# EUROPÄISCHE PATENTSCHRIFT

(11) **EP 0 505 803 B1**
(45) Veröffentlichungstag und Bekanntmachung des Hinweises auf die Patenterteilung: **18.10.1995**
(21) Anmeldenummer: 92103962.4
(22) Anmeldetag: 09.03.1992
(51) Int. Cl.: C08G 18/67, C08F 299/06, C09D 175/16, C08G 18/79

(54) **Polyurethanvinylether**
Polyurethane vinyl ethers
Ethers vinyliques de polyuréthane

(30) Priorität: 23.03.1991 DE 4109649
(43) Veröffentlichungstag der Anmeldung: 30.09.1992
(73) Patentinhaber: BASF Aktiengesellschaft, 67063 Ludwigshafen (DE)
(72) Erfinder: Jaeger, Ulrich, Dr., W-6721 Harthausen (DE); Beck, Erich, Dr., W-6721 Harthausen (DE); Karcher, Michael, Dr., W-6830 Schwetzingen (DE)

(56) Entgegenhaltungen:
- EP-A- 0 315 020
- WO-A-90/02614
- GB-A- 2 163 172

## Beschreibung

Die Erfindung betrifft Polyurethanvinylether, erhältlich durch Umsetzung von
A) 1 NCO-Äquivalent mindestens eines Isocyanuratgruppen aufweisenden Polyisocyanats mit
B) 0,01 - 1,0 OH-Äquivalenten mindestens eines Monohydroxyvinylethers und
C) 0 - 0,99 Äquivalenten von mit OCN reaktiven funktionellen Gruppen weiterer Verbindungen.

Weiterhin betrifft die Erfindung strahlungshärtbare Massen, welche die Polyurethanvinylether enthalten.

Strahlungshärtbare Massen auf Basis von Vinyletherverbindungen sind u.a. aufgrund ihrer Härtungsgeschwindigkeit von Interesse. Vinylether werden im allgemeinen durch Umsetzung von Alkoholen mit Acetylen hergestellt und polymerisieren nach einem kationischen Mechanismus. Vinylether mit größerem Molekulargewicht sind z.B. durch partielle Veretherung von Diolen mit Acetylen und anschließende Umsetzung der noch verbleibenden Hydroxylgruppe der eingesetzten Diole mit Carbonsäure- oder Isocyanatverbindungen erhältlich.

Aus der US-A-4 775 732 und US-A-4 751 273 sind in entsprechender Weise hergestellte Polyurethanvinylether bekannt. Als Isococyanatverbindungen werden Diisocyanate oder Reaktionsprodukte von Diisocyanaten mit Polyolen genannt.

In der WO 90/02614 werden strahlungshärtbare Massen beschrieben, welche Polyurethanvinylether aus aromatischen Diisocyanten mit zwei Phenylringen enthalten.

Bei vielen Anwendungen werden besonders hohe Anforderungen an die Härte von Beschichtungen und Formkörpern gestellt. Des weiteren sind für technische Anwendungen im allgemeinen besonders kurze Härtungszeiten erwünscht.

Die bisher bekannten strahlungshärtbaren Massen auf Basis von Polyurethanvinylethern erfüllen diese Anforderungen noch nicht im gewünschten Maße.

Aufgabe der vorliegenden Erfindung waren daher Polyurethanvinylether, welche nach möglichst kurzer Strahlungshärtung besonders harte Beschichtungen und Formkörper ergeben.

Demgemäß wurden die oben definierten Polyurethanvinylether gefunden.

Die erfindungsgemäßen Polyurethanvinylether sind erhältlich durch Umsetzung von
A) 1 NCO-Äquivalent mindestens eines Isocyanuratgruppen aufweisenden Polyisocyanats mit
B) 0,01 - 1,0, bevorzugt 0,3-1,0 besonders bevorzugt 0,6-1,0, ganz besonders bevorzugt 0,8-1,0 Äquivalenten mindestens eines Monohydroxyvinylethers und
C) 0 - 0,99, bevorzugt 0-0,7, besonders bevorzugt 0-0,4, ganz besonders bevorzugt 0-0,2 Äquivalenten mit Isocyanat reaktiver funktioneller Gruppen von weiteren Verbindungen.

Bei den Isocyanuratgruppen aufweisenden Polyisocyanaten A) handelt es sich um Trimerisierungsprodukte von Polyisocyanaten, insbesondere von Diisocyanaten.

Geeignet sind z.B. aliphatische, bzw. cycloaliphatische, Verbindungen A), vorzugsweise solche auf Basis von C₁-C₁₂-, insbesondere C₂-C₈-Alkylendiisocyanaten, wie Hexamethylendiisocyanat oder von C₅-C₁₈, insbesondere C₆-C₁₆-Cycloalkylendiisocyanaten, insbesondere Isophorondiisocyanat. Ebenso geeignet sind aromatische Verbindungen A), insbesondere solche von C₅-C₁₉-, vorzugsweise C₆-C₁₆-Arylen bzw. Alkarylendiisocyanaten, wie Phenylen-1,4-, Toluylen-2,4-, Toluylen-2,6-, Diphenyl-4,4'-, Diphenylmethan-4,4' oder Naphthalin-1,5-diisocyanat.

Mit aromatischen Verbindungen A) können besonders große Härten, z.B. von Beschichtungen erzielt werden. Polyurethanvinylether auf Basis aliphatischer Verbindungen A) können aufgrund ihrer im allgemeinen geringen Lösungsviskosität im Vergleich zu solchen auf Basis von aromatischen Verbindungen A) weniger Lösungsmittel zur Einstellung der Verarbeitungsviskosität erforderlich machen.

Besonders bevorzugt sind daher Verbindungen A), welche aus einem Gemisch aus insgesamt 10 bis 90 mol-%, besonders bevorzugt 20 bis 80 mol-%, ganz besonders bevorzugt 30 bis 70 mol-% einer aliphatischen, bzw. cycloaliphatischen, Verbindung A), insbesondere eines C₂-C₈-Alkylendiisocyanats, und 10 bis 90 mol-%, besonders bevorzugt 30 bis 70 mol-% einer aromatischen Verbindung A), insbesondere eines C₆-C₁₆-Arylen bzw. Alkarylendiisocyanats aufgebaut sind.

Die Trimerisierung von Polyisocyanaten, insbesondere Diisocyanaten, kann in dem Fachmann bekannter Weise bei erhöhter Temperatur, insbesondere bei 50 bis 150°C, gegebenenfalls unter Zusatz eines Katalysators, z.B. Trialkylphosphinen, wie Tributylphosphin, oder z.B. Trimethylbenzylammoniumhydroxid durchgeführt werden, wie es z.B. in der Encyclopedia of Chem. Technology, Bd. 13, Seite 794 (1978) beschrieben ist.

Bei der Trimerisierungsreaktion entstehen neben Polyisocyanaten mit einer Isocyanuratgruppe, z.B. Tri-isocyanato-isocyanuraten als Trimere aus 3 Molekülen Diisocyanat, auch solche mit mehreren Isocyanuratgruppen.

Bevorzugt enthalten die Verbindungen A) mindestens 50 Gew.-%, besonders bevorzugt mindestens 70 Gew.-% Polyisocyanate mit einer Isocyanuratgruppe.

Das mittlere Molekulargewicht der Verbindungen A) liegt bevorzugt zwischen 300 und 3000, besonders bevorzugt zwischen 300 und 1000 g/mol.

Geeignete Monohydroxyvinylether B) sind z.B. Vinylether von aliphatischen, bzw. cycloaliphatischen oder aromatischen Diolen, Polyolen oder Polyesterolen, in denen bis auf eine verbleibende Hydroxylgruppe alle Hydroxylgruppen verethert sind.

Bevorzugt sind Monohydroxy-C₁-C₈-, insbesondere C₁-C₆-Alkylvinylether, z.B. 4 Hydoxybutylvinylether, 3 Hydroxypropylvinylether und 2 Hydroxyethylvinylether.

Monohydroxyvinylether können z.B. durch die bekannte Umsetzung der oben genannten Alkohole mit entsprechenden Mengen Acetylen in Gegenwart von Kaliumhydroxid erhalten werden.

Bei den weiteren Verbindungen C), welche mit Isocyanat reaktive funktionelle Gruppen besitzen, kann es sich zum Beispiel um Verbindungen mit primären oder sekundären Aminogruppen oder Hydroxylgruppen handeln.

In Betracht kommen auch Verbindungen mit mehreren dieser funktionellen Gruppen, z.B. als Kettenverlängerer. Die Vernetzer können auch noch Vinylethergruppen enthalten. Genannt sei z.B. Trimethylolpropanmonovinylether.

Bevorzugte Verbindungen C) sind C₁-C₈-Alkanole wie Methanol, Ethanol, Propanol und n-Butanol.

Die erfindungsgemäßen Polyurethanvinylether enthalten die Verbindungen C) im wesentlichen um nicht mit Monohydroxyvinylethern umgesetzte Isocyanatgruppen abzusättigen, so daß kein freies Isocyanat in den Polyurethanvinylethern vorliegt.

Die Herstellung der Polyurethanvinylether kann durch Umsetzung der Aufbaukomponenten A), B) und gegebenenfalls C) in bekannter Weise erfolgen. 1 NCO-Äquivalent der Komponenten A) kann dabei gleichzeitig mit den Komponenten B) und C) umgesetzt werden.

Die Umsetzung kann jedoch auch stufenweise durchgeführt werden, indem die Komponente A) zunächst mit einer der Komponenten B) oder C) umgesetzt wird. Durch Überwachung des Isocyanatgehaltes kann festgestellt werden, wann die eingesetzte Menge der Komponenten B) oder C) nahezu Vollständig reagiert hat. Anschließend kann die Umsetzung mit der noch verbleibenden Komponenten durchgeführt werden, wobei diese auch im überschuß, bezogen auf die noch vorhandenen Isocyanatgruppen, eingesetzt werden kann.

Die Umsetzung der Komponenten A) mit B) und C) erfolgt bevorzugt bei 50 bis 150°C, insbesondere 70-120°C in Gegenwart eines Katalysators für die Urethanbildung.

Geeignete Katalysatoren sind z.B. in Houben Weyl, Methoden der organischen Chemie, 8d. XIV/2, S. 60f, Georg Thieme-Verlag, Stuttgart (1963), bzw. Ullmann, Encyklopädie der technischen Chemie, Bd. 19, S. 306 (1981) beschrieben. Bevorzugt sind zinnhaltige Verbindungen wie Dibutylzinndilaurat, Zinn(II)octoat oder Dibutylzinndimethoxid.

Im allgemeinen werden solche Katalysatoren in einer Menge von 0,001 bis 2,5 Gew.-%, bevorzugt von 0,005 bis 1,5 Gew.-%, bezogen auf die Gesamtmenge der Reaktanden, eingesetzt.

Die Umsetzung kann auch in Gegenwart von Lösungsmitteln, die keine mit Isocyanat reaktiven funktionellen Gruppen aufweisen, durchgeführt werden. Als Lösungsmittel besonders geeignet sind z.B. Butyl-, Ethylacetat und Tetrahydrofuran.

Die erfindungsgemäßen Polyurethanvinylether eignen sich besonders für strahlungshärtbare Massen, welche zur Herstellung von Beschichtungen und Formkörpern verwendet werden.

Bevorzugt enthalten die strahlungshärtbaren Massen
20-100 Gew.-%, besonders bevorzugt 40-100 Gew.-%, ganz besonders bevorzugt 60-100 Gew.-% der erfindungsgemäßen Polyurethanvinylether und
0 - 80 Gew.-% besonders bevorzugt 0-60 Gew.-%, ganz besonders bevorzugt 0-40 Gew.-% weiterer strahlungshärtbarer, kationisch polymerisierbarer Verbindungen.

Die Gewichtsangaben beziehen sich dabei auf den Gesamtgehalt an strahlungshärtbaren, kationisch polymerisierbaren Verbindungen in den strahlungshärtbaren Massen.

Als weitere strahlungshärtbare, kationisch polymerisierbare Verbindungen in Betracht kommen vor allem niedermolekulare Verbindungen und mit einem Molekulargewicht unter 500, vorzugsweise zwischen 60 und 400. In Betracht kommen neben Mono- und Polyvinylethern auch strahlungshärtbare, kationisch polymerisierbare Expoxidverbindungen, wie sie z.B. aus der EP-B-123 912 bekannt sind. Beispielsweise genannt seien Bisphenol-A-diglycidylether und 3,4-Epoxycyclohexancarbonsäure-3'-4'-epoxycyclohexylmethylester. Bevorzugt handelt es sich um Vinylether von C₁-C₈-Monohydroxyalkanen oder Polyvinylether von aliphatischen C₂-C₁₂-Polyolen mit 2-4 Hydroxygruppen.

Bei den genannten Polyvinylethern von Polyolen sind vorzugsweise alle Hydroxygruppen der Polyole zu Vinylethergruppen umgesetzt.

Die strahlungshärtbaren Massen können zur Einstellung der Verarbeitungsviskosität auch inerte Lösungsmittel enthalten.

In Betracht kommen z.B. Ethyl- und Butylacetat.

Die strahlungshärtbaren Massen können durch kationische Polymerisation gehärtet werden. Die kationische Polymerisation kann z.B. thermisch in Gegenwart einer Lewissäure wie Bortrifluorid oder starker Säuren, z.B. Sauerstoffsäuren wie p-Toluolsulfonsäure oder Trifluormethylsulfonsäure als Katalysatoren, oder photochemisch erfolgen.

Bevorzugt ist die photochemische Härtung, d.h. Strahlungshärtung durch energiereiche Strahlen wie Elektronenstrahlen oder UV-Licht.

Als Katalysatoren werden den strahlungshärtbaren Massen im Falle der photochemischen Härtung Oniumverbindungen, z.B. Sulfonium- oder Iodoniumverbindungen wie Triarylsulfoniumsalze oder Diaryliodoniumsalze zugesetzt.

Die Katalysatoren für die thermische bzw. photochemische Härtung werden den strahlungshärtbaren Massen bevorzugt in einer Menge von 0,001 bis 10, besonders bevorzugt von 0,2 bis 5 Gew.-%, bezogen auf kationisch polymerisierbare Verbindungen, zugesetzt.

Die Härtung, d.h. die kationische Polymerisation erfolgt geeigneterweise nach dem Auftragen der strahlungshärtbaren Massen auf die gewünschten Substrate, z.B. mit Oberflächen aus Holz, Metall, Keramik, Kunststoff, Papier oder der Formgebung der strahlungshärtbaren Massen z.B. zu Druckformen.

Bei der thermischen Härtung sind Temperaturen zwischen 50 und 180°C bevorzugt.

Die Elektronenstrahlhärtung wird vorzugsweise mit Elektronenstrahlen einer Energie von 50 bis 500 KEV durchgeführt. Zur Härtung mit UV-Licht können vorzugsweise handelsübliche UV-Strahler, welche in einem Wellenlängenbereich von 250 bis 400 nm Strahlung emittieren, eingesetzt werden.

Die Strahlungshärtung kann insbesondere auch nach einer kurzen Vorheizzeit, z.B. bei Temperaturen von 40 bis 100°C zur zumindest teilweisen Entfernung von gegebenenfalls eingesetzten Lösungsmitteln durchgeführt werden.

Die strahlungshärtbaren Massen können gegebenenfalls nach Zusatz- von Farbstoffen, Pigmenten und weiteren Hilfsstoffen wie Verlaufsmittel, z.B. als Lacke, Schutzanstriche oder Druckfarben Verwendung finden.

Die Verwendung der erfindungsgemäßen strahlungshärtbaren Massen ist in toxikologischer Hinsicht in vielen Fällen weniger bedenklich als die Verwendung von strahlungshärtbaren Massen auf Basis von wesentlich leichter flüchtigen Diisocyanaten, z.B. Toluylendiisocyanat oder Isophorondiisocyanat.

Die mit den strahlungshärtbaren Massen hergestellten Beschichtungen und Formkörper zeichnen sich schon nach kurzer Härtungszeit durch eine große Härte aus.

### Beispiel

811 g einer 60 gew.-%igen Lösung eines Isocyanurats aus 3 mol Toluylendiisocyanat und 2 mol Hexamethylendiisocyanat in Butylacetat mit insgesamt 2,02 Äquivalenten NCO (Desmodur® HL von Bayer) wurden mit 220,4 g Butandiolmonovinylether 120 Minuten bei 60°C in Gegenwart von 0,7 g Dibutylzinndilaurat umgesetzt. Nachdem der Isocyanatgehalt bei 0,49 Gew.-% (0,056 Äq. NCO) konstant wurde und der Butandiolmonovinylether im wesentlichen umgesetzt war, wurden 4 g Methanol zugegeben, um noch vorhandene Isocyanatreste zu binden.

Die erhaltene Lösung des Polyurethanvinylethers wurde mit Tetraethylenglycoldivinylether (TEGDVE) auf eine Viskosität von 2000 mPas verdünnt und 1,5 Gew.-% Bis[4-(diphenylsulfonio)-phenyl]sulfid-bis-hexafluorphosphat, bezogen auf den Feststoffgehalt, als Photoinitiator (KI 85 von Degussa) zugesetzt. Die Lösung wurde auf Glasplatten aufgetragen und das Lösungsmittel bei 60°C abgedampft.

Anschließend wurde die Beschichtung (Schichtdicke 80 µm) durch Bestrahlen mit einem Quecksilberhochdruckstrahler (von IST) mit einer Leistung von 120 Watt/cm gehärtet.

Die Härte der Beschichtung wurde durch die Pendelhärte nach DIN 53 157 beurteilt.

Die Härtungsgeschwindigkeit ergab sich aus der Geschwindigkeit, mit der ein Band, auf dem die beschichteten Träger lagen, an der Quecksilberhochdrucklampe vorbeigeführt wurde.

Die Ergebnisse sind in der Tabelle aufgeführt.

### Vergleichsbeispiel

467,4 g eines Polyesterdiols, hergestellt aus Neopentylglykol und Adipinsäure, mit der Molmasse 666 wurden mit 388,5 g Isophorondiisocyanat in Gegenwart von 0,8 Teilen Dibutylzinndilaurat bei 70°C umgesetzt. Nach Erreichen des vorausberechneten NCO-Wertes von 10,2 Gew.-%, (2,09 Äquivalente OCN) werden bei der gleichen Temperatur 243,2 g Butandiolmonovinylether zugegeben. Die Reaktion wurde fortgeführt bis der Isocyanatwert unter 0,1 % gefallen war. Zur Erniedrigung der Viskosität wurde das Reaktionsprodukt mit Butylacetat auf einen Festgehalt von 75 % verdünnt und anschließend mit TEGDVE eine Verarbeitungsviskosität von 700 mPas eingestellt.

Die anschließende Prüfung erfolgte wie im Beispiel beschrieben (Ergebnisse in der Tabelle).

**Tabelle**

| | Gew.-%* Polyurethanvinylether | Gew.-%* TEGDVE | Härtungsgeschwindigkeit m/s | Pendelhärte s |
|---|---|---|---|---|
| Beispiel | 47 | 53 | 60 | 45 |
| Vergleich | 60 | 40 | < 2,5** | - |

| | | | | |
|---|---|---|---|---|
| * bezogen auf Geamtgehalt an strahlungshärtbaren kationisch polymerisierbaren Verbindungen | | | | |
| ** nicht ausgehärtet | | | | |

## Patentansprüche

1. Polyurethanvinylether, erhältlich durch Umsetzung von
A) 1 NCO-Äquivalent mindestens eines Isocyanuratgruppen aufweisenden Polyisocyanats mit
B) 0,01 - 1,0 OH-Äquivalenten mindestens eines Monohydroxyvinylethers und
C) 0 - 0,99 Äquivalenten von mit OCN reaktiven funktionellen Gruppen weiterer Verbindungen.

2. Polyurethanvinylether gemäß Anspruch 1, wobei die Isocyanuratgruppen aufweisenden Polyisocyanate A) aus insgesamt
10-90 mol-% eines C₂-C₈-Alkylendiisocyanats und
10-90 mol-% eines C₆-C₁₆-Arylen- bzw. Alkarylendiisocyanats
aufgebaut sind.

3. Polyurethanvinylether gemäß Anspruch 1 oder 2, wobei es sich bei den Monohydroxyvinylethern B) um Monohydroxy-C₁-C₈-Alkylvinylether handelt.

4. Polyurethanvinylether gemäß mindestens einem der Ansprüche 1 bis 3, wobei es sich bei den weiteren Verbindungen C) um C₁-C₈-Alkanole handelt.

5. Strahlungshärtbare Massen, enthaltend Polyurethanvinylether nach mindestens einem der Ansprüche 1 bis 4.

6. Mit strahlungshärtbaren Massen nach Anspruch 5 beschichtete Substrate.

7. Formkörper aus strahlungshärtbaren Massen nach Anspruch 5.

8. Verfahren zur Herstellung von Beschichtungen und Formkörpern, dadurch gekennzeichnet, daß strahlungshärtbare Massen nach Anspruch 5 unter Zusatz eines Photoinitiators für die kationische Polymerisation durch energiereiche Strahlung gehärtet werden.

## Claims

1. A polyurethane vinyl ether, obtainable by reacting
A) 1 NCO equivalent of one or more isocyanurate-containing polyisocyanates with
B) 0.01-1.0 OH equivalent of one or more monohydroxyvinyl ethers and
C) 0-0.99 equivalent of functional groups of further compounds, which groups are reactive with OCN.

2. A polyurethane vinyl ether as claimed in claim 1, wherein the isocyanurate-containing polyisocyanates A) are composed of a total of
10-90 mol % of a C₂-C₈-alkylene diisocyanate and
10-90 mol % of a C₆-C₁₆-arylene or alkylarylene diisocyanate.

3. A polyurethane vinyl ether as claimed in claim 1 or 2, wherein the monohydroxyvinyl ethers B) are monohydroxy-C₁-C₈-alkyl vinyl ethers.

4. A polyurethane vinyl ether as claimed in any of claims 1 to 3, wherein the further compounds C) are C₁-C₈-alkanols.

5. A radiation-curable material containing a polyurethane vinyl ether as claimed in at least one of claims 1 to 4.

6. A substrate coated with a radiation-curable material as claimed in claim 5.

7. A molding of a radiation-curable material as claimed in claim 5.

8. A process for the production of coatings and moldings, wherein a radiation-curable material as claimed in claim 5 is cured by high energy radiation with the addition of a photoinitiator for the cationic polymerization.

## Revendications

1. Polyuréthannevinyléthers, que l'on peut obtenir par la réaction de
A) 1 équivalent de NCO d'un polyisocyanate présentant au moins un radical isocyanurate avec
B) 0,01 à 1,0 équivalent d'OH d'au moins un éther monohydroxyvinylique et
C) 0 à 0,99 équivalent de radicaux fonctionnels réactifs avec OCN d'autres composés.

2. Polyuréthannevinyléthers suivant la revendication 1, caractérisé en ce que les polyisocyanates présentant des radicaux isocyanurate A) sont constitués, au total, de
10 à 90 moles d'un diisocyanate d'alkylène en C₂ à C₈ et
10 à 90 moles d'un diisocyanate d'alcarylène ou d'arylène en C₆ à C₁₆.

3. Polyuréthannevinyléthers suivant la revendication 1 ou 2, caractérisé en ce qu'il s'agit, dans le cas des éthers monohydroxyvinyliques B) d'éthers monohydroxyalkyl(C₁-C₈)vinyliques.

4. Polyuréthannevinyléthers suivant l'une quelconque des revendications 1 à 3, caractérisé en ce qu'il s'agit, dans le cas des autres composés C), d'alcanols en C₁ à C₈.

5. Masses durcissables par des rayonnements, contenant des polyuréthannevinyléthers suivant au moins l'une quelconque des revendications 1 à 4.

6. Supports revêtus de masses durcissables par des rayonnements suivant la revendication 5.

7. Articles moulés obtenus à partir de masses durcissables par des rayonnements suivant la revendication 5.

8. Procédé de réalisation de revêtements et de fabrication de corps moulés, caractérisé en ce que l'on fait durcir des masses durcissables par des rayonnements suivant la revendication 5 en recourant à l'addition d'un photoamorceur pour la polymérisation cationique par un rayonnement riche en énergie.
